# EUROPÄISCHE PATENTSCHRIFT

(11) **EP 2 147 229 B1**
(45) Veröffentlichungstag und Bekanntmachung des Hinweises auf die Patenterteilung: **07.09.2011**
(21) Anmeldenummer: 08749099.1
(22) Anmeldetag: 24.04.2008
(51) Int. Cl.: F16F 15/134

(54) **SCHUH MIT EINER FEDERPOSITIONSBEGRENZUNG BZW. TORSIONSSCHWINGUNGSDÄMPFER MIT EINEM SOLCHEN SCHUH**
SHOE HAVING A SPRING POSITION LIMITATION, OR TORSIONAL OSCILLATION DAMPER HAVING SUCH A SHOE
PATIN COMPRENANT UN DISPOSITIF DE LIMITATION DE POSITION DE RESSORT OU DISPOSITIF D'AMORTISSEMENT DES VIBRATIONS DE TORSION COMPRENANT UN PATIN DE CE TYPE

(30) Priorität: 14.05.2007 DE 102007022891
(43) Veröffentlichungstag der Anmeldung: 27.01.2010
(73) Patentinhaber: BorgWarner Inc., Auburn Hills, MI 48326 (US)
(72) Erfinder: BÖLLING, Jochen, 76534 Baden-Baden (DE)
(74) Vertreter: Leckel, Ulf
(86) Internationale Anmeldenummer: PCT/EP2008/003300
(87) Internationale Veröffentlichungsnummer: WO 2008/138461

(56) Entgegenhaltungen:
- DE-A1- 3 528 662
- DE-A1- 19 958 814
- DE-A1-102004 006 879

## Beschreibung

Die Erfindung betrifft einen Torsionsschwingungsdämpfer mit einem Schuh mit einer Federpositionsbegrenzung gemäß den oberbegrifflichen Merkmalen des Patentanspruchs 1 (siehe z. B .die DE 10 2004 006 879 A1).

Bekannt ist aus EP 1 584 839 A1 ein Torsionsschwingungsdämpfer mit einem mindestens einen Primärmitnehmer aufweisenden antriebsseitigen Primärelement und einem mindestens einen Sekundärmitnehmer aufweisenden abtriebsseitigen Sekundärelement, die entgegen mindestens einem zwischen einem der Primärmitnehmer und einem der Sekundärmitnehmer vorgesehenen Federelement um eine Neutralposition relativ zueinander verdrehbar sind, sowie mit stirnseitig der Federelemente angeordneten Endschuhen, wobei wenigstens einer der Endschuhe derart ausgebildet ist, dass bei Erreichen eines Schwellen-Relativdrehwinkels gegenüber der Neutralposition wenigstens einer der Mitnehmer unter Umgehung des wenigstens einen Endschuhs in direktem Kontakt mit dem Federelement tritt.

Torsionsschwingungsdämpfer oder Drehschwingungsdämpfer sind in unterschiedlichen Variationen und aus verschiedenen Anwendungen bekannt. Insbesondere sind sie im Kraftfahrzeugbau zur elastischen Kopplung von Verbrennungskraftmaschine und Antriebsstrang vorgesehen. Auf diese Weise soll verhindert werden, dass Schwingungen von der Seite der Verbrennungskraftmaschine auf den Antriebsstrang bzw. das Getriebe übertragen werden. Eine derartige Übertragung der Schwingungen ist bei Kraftfahrzeugantrieben vor allen Dingen bei Verbrennungskraftmaschinen mit vergleichsweise wenig Zylindern und bei niedrigen Drehzahlen gegeben. Eine effektive Dämpfung derartiger Schwingungen führt dazu, dass mit niedrigeren Drehzahlen der Verbrennungskraftmaschine gefahren werden kann, was im Allgemeinen einen verringerten Kraftstoffverbrauch mit sich bringt und somit sowohl ökonomisch als auch ökologisch von Vorteil ist.

Torsionsschwingungsdämpfer mit einem antriebsseitigen Primärelement und einem abtriebsseitigen Sekundärelement, welche über eine Federeinrichtung miteinander gekoppelt und um eine Rotationsachse begrenzt gegeneinander verdrehbar sind, sind beispielsweise aus der EP 1 371 875 A1 oder der DE 195 22 718 A1 bekannt. Das Primärelement umfasst einen ersten nachfolgend auch als Primärmitnehmer bezeichneten Mitnehmer. Das Sekundärelement umfasst einen zweiten nachfolgend auch als Sekundärmitnehmer bezeichneten Mitnehmer. Das Drehmoment wird vom Primärelement mittels des Primärmitnehmers zunächst auf die Federeinrichtung und von dort auf den Sekundärmitnehmer des Sekundärelements übertragen.

Die Federeinrichtung besteht in der Regel aus einem oder mehreren in Umfangsrichtung des Torsionsschwingungsdämpfers hintereinander angeordneten Federelementen, vorzugsweise Schraubenfedern bzw. Schraubenfedersätzen, die gegebenenfalls durch Gleitschuhe miteinander verbunden sind, und beidendseitig über Endschuhe gegen die jeweiligen Mitnehmer abgestützt sind. Erfolgt eine Momentenübertragung von Primärelement zum Sekundärelement, so wird die beschriebene Drehmomentübertragung als Zug bezeichnet. Erfolgt die Drehmomentübertragung hingegen anders herum vom Sekundärelement auf das Primärelement, so ist von Schub die Rede.

Es hat sich gezeigt, dass bei Zug-/Schubwechsel, insbesondere unter Niedriglastbedingungen, ein Übergabegeräusch hörbar sein kann. Dieses ist darauf zurückzuführen, dass die Mitnehmer des Primär- bzw. Sekundärelements bei Zug-/Schubwechsel auf die die Federelemente abstützenden Endschuhe schlagen, wobei das angeführte Übergabegeräusch entstehen kann.

In der DE 101 33 694 A1 wurden aus diesem Grund zusätzliche Federelemente zwischen den Endschuhen und den Mitnehmern angebracht, um deren Aufeinanderschlagen und die damit verbundene Geräuschentwicklung zu reduzieren.

Hingegen wird in der DE 199 58 814 A1 auf derartige zusätzliche Federelemente verzichtet und stattdessen der an der Stirnseite des jeweiligen Federelements anliegende Endschuh so gestaltet, dass dieser die Stirnseite des Federelements nicht vollständig abdeckt. Weiter sind die Mitnehmer mit einem Ausleger versehen, der derart gestaltet ist, dass bei einem Aufeinandertreffen von Mitnehmer und Endschuh zunächst der Ausleger des Mitnehmers an dem Endschuh vorbei direkt auf das Federelement trifft. Hierdurch wird die Bewegung des Mitnehmers zunächst etwas gedämpft, ehe er großflächig auf den Endschuh auftrifft, so dass zumindest bei kleinen zu übertragenden Drehmomenten die oben angeführten Übergabegeräusche verringert werden. Nachteilig bei dieser Vorrichtung ist, dass der anfängliche Dämpfungseffekt nicht stark genug ausfällt, wenn der Mitnehmer mit einem großen Drehimpuls bzw. einem großen Drehmoment beaufschlagt ist. In diesem Fall treten beim Auftreffen des Mitnehmers auf den Anschlag weiterhin Übergabegeräusche auf. In einer bevorzugten Ausführungsform des Drehschwingungsdämpfers nach der DE 199 58 814 A1 wird auf den Ausleger am Mitnehmer verzichtet und die innere Feder der Federanordnung tritt derart aus dem Endschuh aus, dass der Mitnehmer zuerst die innere Feder beaufschlagt. Jedoch treten auch in diesem Fall noch immer Übergabegeräusche auf, wenn der Mitnehmer direkt auf den Endschuh trifft.

Allgemein bekannt ist aus EP 0 236 159 A1 ein Torsionsschwingungsdämpfer, bei dem zwei unterschiedlich dimensionierte Arten von Federn eingesetzt werden, wobei die ersten dieser Federn mit den zweiten dieser Federn jeweils abwechselnd in Reihe geschaltet angeordnet sind.

Aus DE 102 40 839 A1 ist ein Torsionsschwingungsdämpfer bekannt, bei dem innerhalb der Windungen einer ersten Feder eine zweite Feder mit geringerem Außendurchmesser eingesetzt ist. Dabei ragt die zweite Feder stirnseitig ein Stück aus der Stirnseite der ersten Feder heraus. Beide Federn sind dabei jeweils vollständig innerhalb eines gemeinsamen Endanschlags gelagert, so dass beim Anschlagen eines Mitnehmers störende Geräusche entstehen.

DE 199 09 044 A1 beschreibt eine weitere derartige Anordnung eines Torsionsschwingungsdämpfers, wobei die zweite Feder in ihrem mittleren Abschnitt eine Federwindung mit vergrößertem Durchmesser aufweist, welche zwischen zwei benachbarte Federwindungen der ersten, äußeren Feder eingreifen und so die zweite Feder in der ersten Feder fixieren. Bei dieser Anordnung ist die zweite, innere Feder härter als die äußere Feder dimensioniert. Beide Federn sind wiederum stirnseitig an jeweils einem Endanschlag bzw. Mitnehmer gelagert.

DE 100 19 873 A1 beschreibt einen Torsionsschwingungsdämpfer mit einer Vielzahl von Federn, welche in Gleitschuhen gelagert sind. In Umfangsrichtung wechseln sich dabei teilweise verschieden dimensionierte erste und zweite Federn ab.

DE 41 41 723 C2 beschreibt einen Torsionsschwingungsdämpfer mit einer Leerlauffederung. Auch bei dieser Anordnung sind in Umfangsrichtung verschieden dimensionierte Federn eingesetzt.

DE 35 28 662 A1 beschreibt einen Torsionsschwingungsdämpfer, der in eine Reibscheibe integriert ist und keinen Gleit- order Endschuh aufweist.

Die o.g. DE 10 2004 006 879 A1 beschreibt einen Drehschwingungsdämpfer, der einen Schuh in Form eines Trägerschlittens aufweist. Der Schuh weist in Umfangsrichtung voneinander beabstandete Abstützbereiche auf, zwischen denen ein aus einer äußeren und zwei inneren Schraubendruckfedern bestehender Kraftspeicher angeordnet ist. Die äußere Schraubendruckfeder soll dabei, vorzugsweise unter Vorspannung, an den voneinander beabstandeten Abstützbereichen anliegen. Von den radial äußeren Bereichen des Schuhs, die die Abstützbereiche miteinander verbinden, soll die äußere Schraubendruckfeder jedoch beabstandet sein. Ein Nachteil des bekannten Drehschwingungsdämpfers besteht darin, dass dessen Montage erschwert ist.

Der vorliegenden Erfindung liegt die Aufgabe zugrunde, einen Torsionsschwingungsdämpfer mit einem Schuh zu schaffen, dessen Dämpfungsverhalten einerseits verbessert ist und der andererseits einfach montierbar bzw. zusammenbaubar ist.

Diese Aufgabe wird gelöst durch einen Torsionsschwingungsdämpfer mit zumindest einem Schuh mit den Merkmalen des Anspruchs 1.

Vorteilhafte Ausführungen und Weiterbildungen der Erfindung sind in den Unteransprüchen angegeben.

Erfindungsgemäβ wird in dem Torsionsschwingungsdämpfer demgemäß ein Schuh als Gleitschuh oder Endschuh zum Lagern einer ersten, äußeren Feder und einer innerhalb der ersten, äußeren Feder angeordneten zweiten, inneren Feder vorgesehen, wobei der Schuh eine Federpositionsbegrenzung zum Begrenzen der ersten, äußeren Feder in deren Längsrichtung aufweist und wobei die Federpositionsbegrenzung ausgebildet ist, die zweite, innere Feder stirnseitig aus der ersten, äußeren Feder austreten zu lassen, so dass ein Mitnehmer bei Annäherung in Richtung der Stirnseiten der zweiten, inneren Feder und der ersten, äußeren Feder zuerst die zweite, innere Feder mit Druck beaufschlagt. Eine zum Schuh gehörende Halteeinrichtung legt sowohl die erste, äußere Feder als auch die zweite, innere Feder von der zumindest einen Federpositionsbegrenzung beabstandet am Endschuh oder Gleitschuh relativ zu diesem fest. Die erste, äußere Feder hat in ihrer axialen Erstreckung zwischen der Federpositionsbegrenzung und der davon beabstandeten Halteeinrichtung Spiel, wobei sie an einer Federanlagefläche radial abgestützt ist.

Die Federpositionsbegrenzung bildet bevorzugt dem aus der ersten, äußeren Feder herausragenden Abschnitt der zweiten, inneren Feder zugewandt eine Federanlagefläche zum Abstützen aus. Dadurch wird eine radiale Abstützung der zweiten, inneren Feder beim Einsatz in einem Torsionsschwingungsdämpfer durch die Federpositionsbegrenzung für die erste Feder ausgebildet.

Die Federanlagefläche weist bevorzugt für die zweite, innere Feder einen gekrümmten Verlauf mit einem Radius zumindest dem des Außenumfangs der zweiten, inneren Feder auf. Dadurch wird der zweiten, inneren Feder nicht nur ein Halt in radialer Richtung sondern auch ein Halt in seitlicher Richtung zur radialen Richtung geboten. Die zweite, innere Feder ist vorzugsweise länger als die erste, äußere Feder ausgebildet.

Die zweite, innere Feder weist vorteilhaft einen geringeren Außenumfang auf als ein Innenumfang der ersten, äußeren Feder. Dadurch kann die zweite, innere Feder um zumindest eine Strecke in die erste, äußere Feder hineingestaucht werden, so dass der Mitnehmer die zweite, innere Feder zuerst in die erste, äußere Feder hineinschiebt, bevor der Mitnehmer sowohl die erste, äußere, als auch die zweite, innere Feder gemeinsam zusammenstaucht.

Die zweite, innere Feder ist bevorzugt weicher als die erste, äußere Feder. Eine solche Dimensionierung ermöglicht eine anfänglich besonders weiche Dämpfungswirkung, welche mit zunehmendem Vorschieben des Mitnehmers zunimmt und beim Aufreffen auf zusätzlich die erste äußere Feder eine weitere stärkere Dämpfung erfährt. Vermieden wird dadurch in besonders vorteilhafter Art und Weise ein abruptes Abbremsen bzw. Aufschlagen des Mitnehmers auf eine Federanordnung mit einem einheitlichen und abrupt steigenden Dämpfungseffekt.

In einer Federanordnung mit einem oder mehreren Federsätzen zu beiden Stirnseiten der Federanordnung ist die erste, äußere Feder durch Federpositionsbegrenzungen bevorzugt begrenzt und die zweite, innere Feder ragt vorzugsweise beidseitig aus den Stirnseiten der ersten, äußeren Feder heraus. Bei einer solchen Anordnung werden gegebenenfalls zusätzliche Gleitschuhe zwischengeschaltet, um derartige Federanordnungen abzustützen.

Stirnseitige Enden der zweiten, inneren Feder oder Federn sind in einer neutralen Position bevorzugt unbelastet. In einer Leerlaufposition sind somit vorzugsweise die Enden der zu beiden Seiten hin aus den Stirnseiten der ersten Federn herausragenden zweiten, inneren Federn nicht kraftbeaufschlagt, so dass mit Änderung eines wirkenden Drehmomentes im Torsionsschwingungsdämpfer unabhängig von der Drehmomentrichtung eine weiche Dämpfung einen Drehmomentwechsel einleiten kann.

Sowohl die erste, äußere Feder als auch die zweite, innere Feder können durch zwei voneinander und von den Federenden der Federn beabstandeten Halteeinrichtungen an zwei Gleitschuhen festgelegt sein, wobei die Gleitschuhe frei zueinander über eine Gleitfläche verstellbar sind. Eine solche Anordnung ermöglicht die Anordnung zweier Federn und/oder mehrerer Federsätze mit zwei außenseitigen derart gestalteten Federn in insbesondere einem Torsionsschwingungsdämpfer zur verlängerten Dämpfungsstrecke zwischen zwei Endschuhen anzuordnen. Gegebenenfalls können dabei auch die Gleitschuhe bereits als Endschuhe ausgebildet sein.

Eine weitere Federpositionsbegrenzung kann vorteilhaft am Schuh ausgebildet sein zur Begrenzung des stirnseitigen Federwegs der zweiten, inneren Feder. Die weitere Federpositionsbegrenzung ist dabei bevorzugt für die zweite, innere Feder auf der Federanlagefläche der Federpositionsbegrenzung für die erste, äußere Feder angeordnet.

Die Federpositionsbegrenzung weist bevorzugt eine hindurchgreifende Ausnehmung auf zum Durchtauchenlassen des Mitnehmers gegen die Stirnseiten der zweiten, inneren Feder und der ersten, äußeren Feder. Dies ermöglicht vorteilhaft sowohl eine Begrenzung der Federerstreckung für die erste Feder oder beide Federn und trotzdem ein geräuscharmes oder geräuschvermeidendes Anstoßen des sich gegen die Stirnseiten der Federn bewegenden Mitnehmers.

Die erste, äußere Feder und die zweite, innere Feder können von der Federpositionsbegrenzung aus unterschiedlich weit entfernt aneinander und/oder am Schuh festgelegt sein. Dies ermöglicht eine optimale Einstellung der Federwege von der ersten und von der zweiten Feder und dadurch eine weitere Möglichkeit, die Gesamtfederanordnung optimal auf jeweils gegebene Bedingungen abzustimmen.

Gemäß der Erfindung, die durch die technischen Merkmale des unabhängigen Anspruchs 1 definiert ist, wird dabei durch eine Federpositionsbegrenzung der Weg der ersten, äußeren Feder beschränkt, während der Weg für die Erstreckung der zweiten, inneren Feder über eine längere Erstreckung zugelassen wird, so dass die zweite, innere Feder stirnseitig aus der ersten, äußeren Feder herausragen kann. Vorteilhaft ist dabei eine Ausführungsform, bei welcher die Federpositionsbegrenzung für die erste, äußere Feder zugleich als Federauflage für die zweite, innere Feder geformt ausgebildet ist.

Der Torsionsschwingungsdämpfer ist bevorzugt mit Endschuhen versehen, die so gestaltet sind, dass sie weiterhin die Führung der Federelemente bewerkstelligen, jedoch zu keiner Zeit des Dämpfungsvorgangs direkt mit dem zugehörigen Mitnehmer in Kontakt kommen, sondern dieser statt dessen stets unmittelbar vorzugsweise auf die Stirnseite des jeweiligen Federelements auftrifft. Dabei dämpfen die Federelemente die Aufschlagbewegung der Mitnehmer, so dass unabhängig vom Drehimpuls der Mitnehmer keine Übergabegeräusche auftreten.

Eine vorteilhafte Weiterbildung der Erfindung besteht darin, den wenigstens einen Endschuh mit mindestens einer Vorrichtung zu versehen, die eine Befestigung des Endschuhs am Federelement ermöglicht. Vorzugsweise ist diese Vorrichtung als Haltenase ausgeführt, mit der Windungen mindestens einer Schraubenfeder des zugehörigen Federelements verklemmbar sind. Auf diese Weise wird verhindert, dass sich der Endschuh während des Dämpfungsbetriebs vom Federelement löst und das Federelement seine Führung verliert. Sofern das Federelement aus mehreren verschiedenen, ineinander angeordneten Schraubenfedern besteht, können insbesondere Befestigungsvorrichtungen vorgesehen werden, die den Endschuh mit unterschiedlichen Schraubenfedern verbinden.

Ein derartiger Endschuh ist optional derart ausgebildet, dass der wenigstens eine Mitnehmer in direktem Kontakt mit dem Federelement verbleibt, solange der Schwellen-Relativdrehwinkel überschritten ist. Alternativ oder zusätzlich kann auch der entsprechende Mitnehmer optional derart ausgebildet sein, dass der wenigstens eine Mitnehmer in direktem Kontakt mit dem Federelement verbleibt, solange der Schwellen-Relativdrehwinkel überschritten ist. Es findet folglich stets eine Drehmomentübertragung vom Mitnehmer auf das Federelement statt, anders als bei der o.g. DE 199 58 814 A1, wo ab einem Schwellen-Relativdrehwinkel eine Drehmomentenübertragung vom Mitnehmer auf den Endschuh und vom Endschuh auf das Federelement stattfindet.

Bevorzugt wird ein Torsionsschwingungsdämpfer mit solchen Schuhen und mit einem mindestens einen Primärmitnehmer aufweisenden antriebsseitigen Primärelement und einem mindestens einen Sekundärmitnehmer aufweisenden abtriebsseitigen Sekundärelement, die entgegen mindestens einem zwischen einem der Primärmitnehmer und einem der Sekundärmitnehmer vorgesehenen Federelement um eine Neutralposition relativ zueinander verdrehbar sind, sowie mit stirnseitig des jeweiligen Federelements angeordneten Endschuhen als solchen Schuhen, wobei wenigstens einer der Endschuhe derart ausgebildet ist, dass bei Erreichen eines Schwellen-Relativdrehwinkels gegenüber der Neutralposition wenigstens einer der Mitnehmer unter Umgehung des wenigstens einen Endschuhs in direkten Kontakt mit dem Federelement tritt und wobei der wenigstens eine Endschuh und/oder der wenigstens eine Mitnehmer derart ausgebildet ist bzw. sind, dass der wenigstens eine Mitnehmer in direktem Kontakt mit dem Federelement verbleibt, solange der Schwellen-Relativdrehwinkel überschritten ist.

Im Folgenden wird die Erfindung anhand von Figuren näher erläutert. Gleiche oder funktionsgleiche Bestandteile sind in allen Figuren mit gleichen Bezugszeichen versehen. Es zeigen:
- Fig. 1: schematisch skizziert eine teilweise geschnit- tene Seitenansicht eines Schuhs für einen Tor- sionsschwingungsdämpfer zur Veranschaulichung des Grundprinzips,
- Fig. 2: die Anordnung aus Fig. 1 in einer Frontansicht,
- Fig. 3: eine seitliche Schnittansicht eines beispiel- haften Schuhs innerhalb eines Torsionsschwin- gungsdämpfers,
- Fig. 4: eine Schnittansicht in Umfangsrichtung durch einen Torsionsschwingungsdämpfer mit Blick auf die Stirnseite eines Schuhs,
- Fig. 5: eine Veranschaulichung des Grundprinzips einer weiteren bevorzugten Ausführungsform in drei verschiedenen Spannungszuständen,
- Fig. 6: den Torsionsschwingungsdämpfer gemäß Fig. 1 in auseinandergezogener Darstellung, und
- Fig. 7: einen Ausschnitt aus einem beispielhaften Tor- sionsschwingungsdämpfer mit Endschuhen.

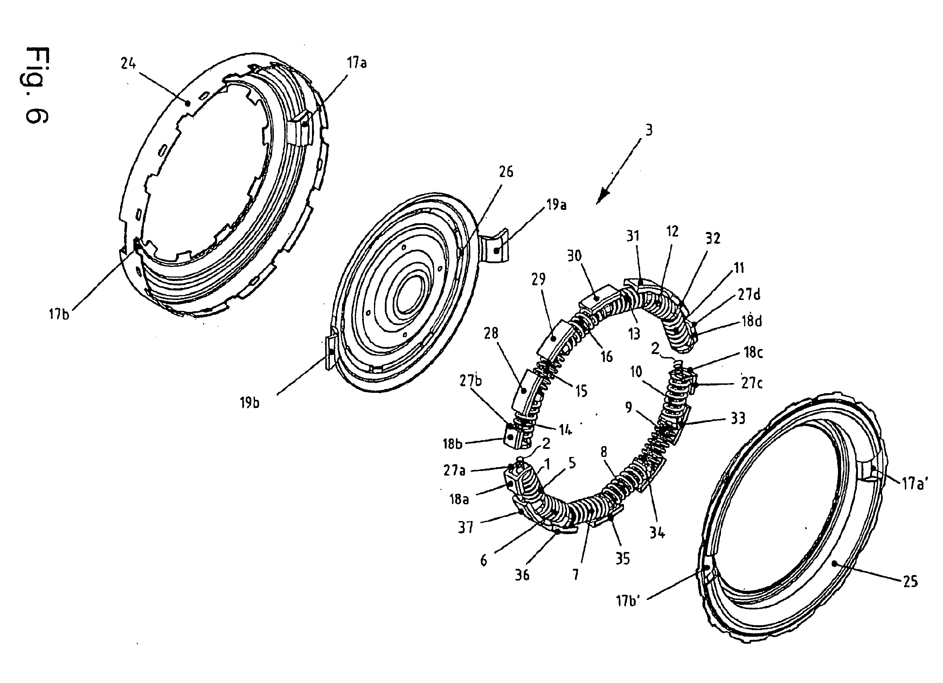

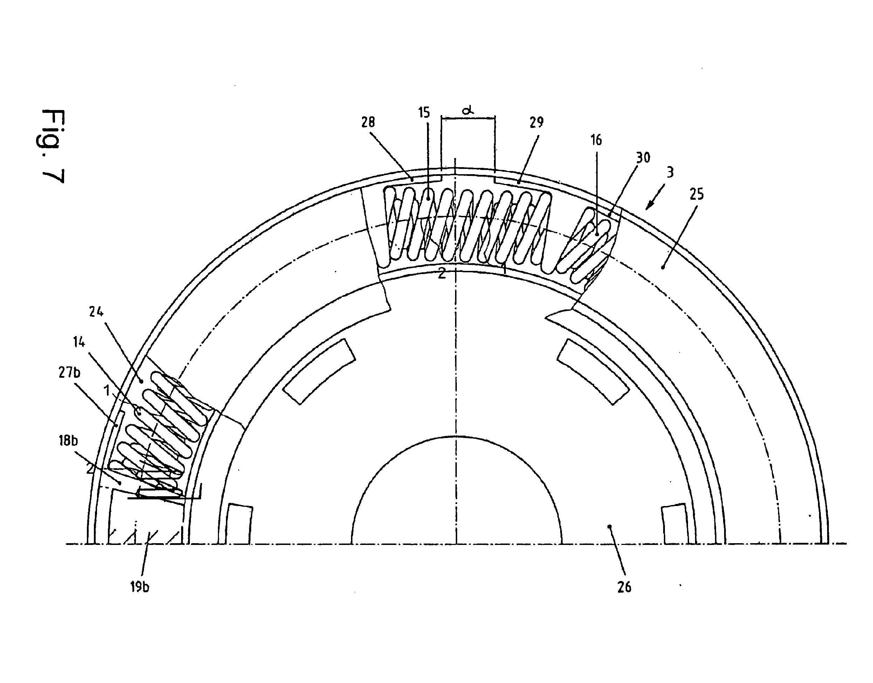

In den Fig. 6 und 7 ist ein Torsionsschwingungsdämpfer 3 mit einem Primärelement in Form einer Mittelscheibe 26 und mit einem Sekundärelement in Form zweier drehfest miteinander verbundener Seitenscheiben 24, 25 dargestellt. Um die Mittelscheibe 26 herum sind in einem durch die hintere Seitenscheibe 24 und durch die vordere Seitenscheibe 25 gebildeten Hohlraum aus mehreren Federsätzen 5, 6, 7, 8, 9, 10, 11, 12, 13, 14, 15, 16 bestehende Federelemente angeordnet. Jeder der Federsätze 5, 6, 7, 8, 9, 10, 11, 12, 13, 14, 15, 16 besteht im vorliegenden Ausführungsbeispiel aus zwei ineinander liegenden Schraubenfedern, einer ersten, äußeren Feder 1 und einer zweiten, inneren Feder 2. Die Federsätze 5, 6, 7, 8, 9, 10 sowie 11, 12, 13, 14, 15, 16 sind durch Abstandshalter, sogenannte Gleitschuhe 28, 29, 30, 31, 32 sowie 33, 34, 35, 36, 37 jeweils ein Federelement bildend hintereinander gereiht. Am jeweiligen Ende eines Federelements ist ein Endschuh 18a, 18b, 18c, 18d angeordnet.

Die Stirnflächen der Endschuhe 18a, 18b, 18c, 18d sitzen in einer Neutralstellung jeweils an einem hier zweiteilig ausgeführten Mitnehmer 17a, 17a'; 17b, 17b' des aus zwei Seitenscheiben 24, 25 bestehenden Sekundärelements 24, 25 auf. Die Endschuhe 18a, 18b, 18c, 18d sind an ihren Stirnseiten U-förmig ausgeführt. Die beiden Schenkel der U-Form sitzen dabei im Wesentlichen formschlüssig auf dem jeweiligen Mitnehmer, bestehend aus den beiden Teilmitnehmern 17a, 17a' bzw. 17b, 17b', des Sekundärelements auf.

Der Zwischenraum zwischen den beiden Schenkeln der U-Form des jeweiligen Endschuhs 18a, 18b, 18c, 18d ist gerade so groß gewählt, dass der Mitnehmer 19b des Primärelements 26 bei einer Relativverdrehung zwischen Primär- und Sekundärelement 24, 25, 26 in eine Drehrichtung direkt auf den Federsatz 14 trifft, ohne den Endschuh 18b zu berühren und dass gleichzeitig der Mitnehmer 19a des Primärelements 26 unmittelbar auf den Federsatz 10 trifft, ohne den Endschuh 18c zu berühren.

Bei einer Relativverdrehung zwischen Primär- und Sekundärelement 24, 25, 26 in die andere Drehrichtung trifft der Mitnehmer 19b des Primärelements 26 unmittelbar auf den Federsatz 5, ohne den Endschuh 18a zu berühren. Gleichzeitig trifft der Mitnehmer 19a des Primärelements 26 auf den Federsatz 11, ohne den Endschuh 18d zu berühren.

Durch diese Maßnahme wird verhindert, dass Übergabegeräusche entstehen.

Der Zeichnung ist weiterhin zu entnehmen, dass die jeweiligen Endschuhe 18a, 18b, 18c, 18d außenumfangseitig Gleitflächen 27a, 27b, 27c, 27d aufweisen, welche sich gegen die Innenwandung eines zylinderförmigen Bereichs einer der Seitenscheiben 24 (oder 25) abstützen. In gleicher Weise wie die Endschuhe 18a, 18b, 18c, 18d sind auch die Gleitschuhe 28, 29, 30, 31, 32, 33, 34, 35, 36, 37 ausgebildet. Auch diese stützen sich außenumfangseitig gegen die Innenwandung des Zylinders der entsprechenden Seitenscheibe 24 (oder 25) ab.

Diese Gleitflächen 27a, 27b, 27c, 27d der Endschuhe 18a, 18b, 18c, 18d sowie die nicht mit Bezugszeichen versehenen Gleitflächen der Gleitschuhe 28, 29, 30, 31, 32, 33, 34, 35, 36, 37 stellen zum einen sicher, dass die Federsätze 5, 6, 7, 8, 9, 10, 11, 12, 13, 14, 15, 16 unter geringer Reibung und ohne Verkanten komprimiert werden, wenn Primär- und Sekundärelemente 24, 25, 26 gegeneinander verdreht werden. Darüber hinaus ist deren Umfangserstreckung im vorliegenden Ausführungsbeispiel so bemessen, dass deren einander zugewandten Stirnflächen in Stoßkontakt treten, bevor die einzelnen Schraubenfedern der Federsätze 5, 6, 7, 8, 9, 10, 11, 12, 13, 14, 15, 16 auf Block gehen. Sie legen somit die maximale Stauchung α der Federsätze 5, 6, 7, 8, 9, 10, 11, 12, 13, 14, 15, 16 fest. Durch diese Maßnahme wird eine Zerstörung der Schaubenfedern bei hohen Drehmomenten verhindert.

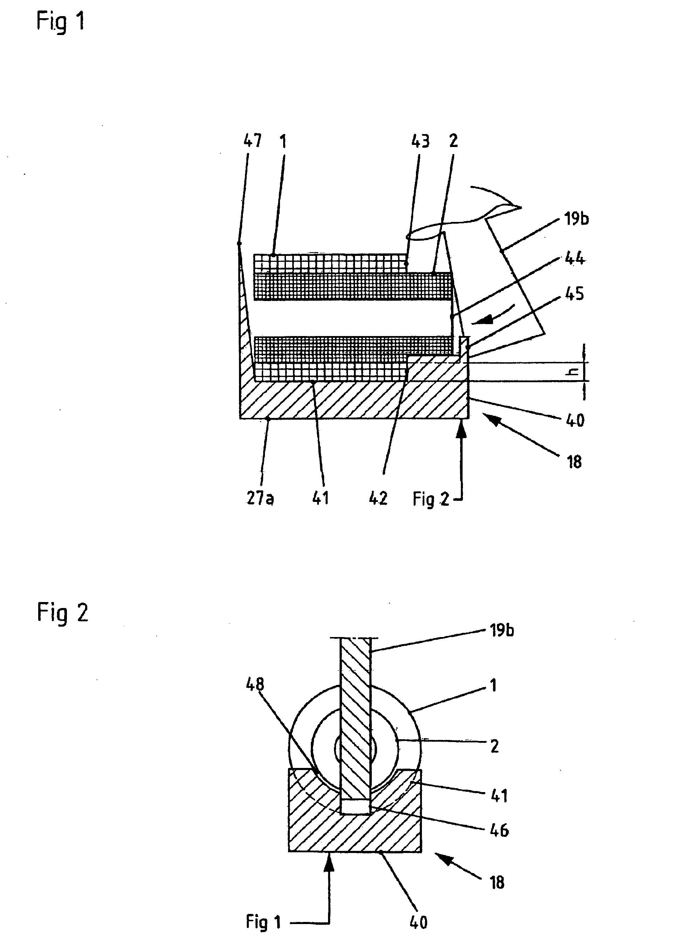

Aus den Fig. 1 und 2 ist eine besonders bevorzugte Ausgestaltung eines beispielhaften Endschuhs 18 ersichtlich. Bezugszeichen, welche anhand der bereits beschriebenen Ausführungsform beschrieben sind, werden unter Verweis auf die Ausführungen nachfolgend nicht näher erläutert.

Der beispielhafte Endschuh 18 weist einen Schuhkörper 40 auf, welcher eine oberseitige Federanlagefläche 41 aufweist, welche zur seitlichen Lagerung und radialen Abstützung der ersten, äußeren Feder 1 dient. Vorzugsweise kann die Federanlagefläche 41 dabei eine Krümmung entsprechend der äußeren Krümmung der ersten, äußeren Feder 1 aufweisen. In einem vorzugsweise stirnseitigen Bereich ist eine Federpositionsbegrenzung 42 an dem Schuhkörper 40 befestigt oder einstückig an diesem ausgebildet. Die Federpositionsbegrenzung 42 steht in oberseitiger Richtung, d. h. in Richtung der aufliegenden ersten, äußeren Feder 1 so weit von der Federanlagefläche 41 ab, dass die Federpositionsbegrenzung 42 einen stirnseitigen Anschlag für die erste, äußere Feder 1 ausbildet. Eine Höhe h der Federpositionsbegrenzung 42 für die erste, äußere Feder 1 ist dabei so gewählt, dass die zweite, innere Feder 2 aus der an der Federpositionsbegrenzung 42 anliegenden ersten Stirnseite 43 der ersten, äußeren Feder herausragen kann und mit ihrer Stirnseite 44 der zweiten, inneren Feder 2 nicht durch die Federpositionsbegrenzung 42 für die erste Feder begrenzt wird.

Optional kann der Schuhkörper 40 noch weiter außenseitig bzw. stirnseitig zusätzlich eine weitere Federpositionsbegrenzung 45 für die zweite, innere Feder 2 aufweisen, so dass auch diese stirnseitig begrenzt wird und sich mit ihrer ersten Stirnseite 44 nur bis zu dieser weiteren Federpositionsbegrenzung 45 erstrecken kann.

Sowohl die Federpositionsbegrenzung 42 für die erste, äußere Feder 1 als auch die weitere Federpositionsbegrenzung 45 für die zweite, innere Feder 2 weisen eine Ausnehmung 46 auf, welche vollständig durch die Körper der Federpositionsbegrenzungen 42, 45 hindurchführt und einem Mitnehmer 19b ermöglicht, durch die Ausnehmung 46 hindurch gegen die Stirnseiten 44, 43 der zweiten, inneren Feder 2 und vorzugsweise auch der ersten, äußeren Feder 1 zu drücken. Durch eine solche Ausgestaltung, bei welcher die zweite, innere Feder 2 aus der ersten, äußeren Feder 1 stirnseitig herausragt, drückt der Mitnehmer 19b zuerst gegen die erste Stirnseite 44 der zweiten, inneren Feder 2 und erst danach gegen die erste Stirnseite 43 der ersten, äußeren Feder 1. Dies bewirkt ein anfänglich leicht gedämpftes Abbremsen des Mitnehmers 19b und erst zu einem späteren Zeitpunkt ein stärkeres Abbremsen des Mitnehmers 19b bzw. aus Sicht eines gleitfähigen Endschuhs 18 zuerst eine langsame Beschleunigung und dann eine stärker werdende Beschleunigung. Rückseitig oder in einem mittleren Abschnitt weist der Endschuh 18 eine von diesem in Richtung der Federn abstehende Federhalteeinrichtung 47 auf, welche beispielsweise als ein dornförmiger Vorsprung zwischen einzelne Windungen der ersten, äußeren Feder 1 und der zweiten, inneren Feder 2 geführt ist. Dadurch sind die beiden Federn 1, 2 im Bereich der Federhalteeinrichtung 47 verschiebefest mit dem Endschuh 18 verbunden. Die Federn 1, 2 können aber durch die Federhalteeinrichtung 47 auch nur rückseitig abgestützt sein.

Je nach gewünschter Wirkung und gewünschtem Einsatzgebiet können die beiden Federn 1, 2 individuell ausgestaltet sein. Besonders bevorzugt wird der Einsatz einer weichen zweiten, inneren Feder 2 in Verhältnis zu einer dazu härteren ersten, äußeren Feder 1. Prinzipiell können die Federparameter jedoch auch gleich oder sogar umgekehrt gewählt werden. Anstelle die zweite, innere Feder 2 ebenfalls mittels der Federhalteeinrichtung 47 an der gleichen Position wie die erste, äußere Feder 1 am Endschuh 18 zu fixieren, kann die zweite, innere Feder 2 auch an einer anderen Position relativ zu der ersten, äußeren Feder 1 fixiert werden. In einem solchen Fall kann beispielsweise eine Windung der zweiten, inneren Feder 2 mit größerem Umfang zwischen entsprechende Windungen der ersten, äußeren Feder 1 treten.

Gemäß weiteren Ausführungsformen kann die zweite, innere Feder 2 nicht nur aus der ersten Stirnseite 43 der ersten, äußeren Feder 1 herausragen sondern auch aus der dazu gegenüberliegenden zweiten Stirnseite der ersten, äußeren Feder 1. Insbesondere kann eine derartige Ausgestaltung nicht nur in Form eines Endschuhs 18 sondern auch in Form eines Gleitschuhs 28 vorgesehen werden.

Vorzugsweise ist die Oberfläche der Federpositionsbegrenzung 42 für die erste Feder 1 mit einer Oberflächenkrümmung entsprechend dem Außenumfang der zweiten, inneren Feder 2 ausgebildet, so dass sie eine Federanlagefläche 48 für die zweite, innere Feder 2 ausbildet.

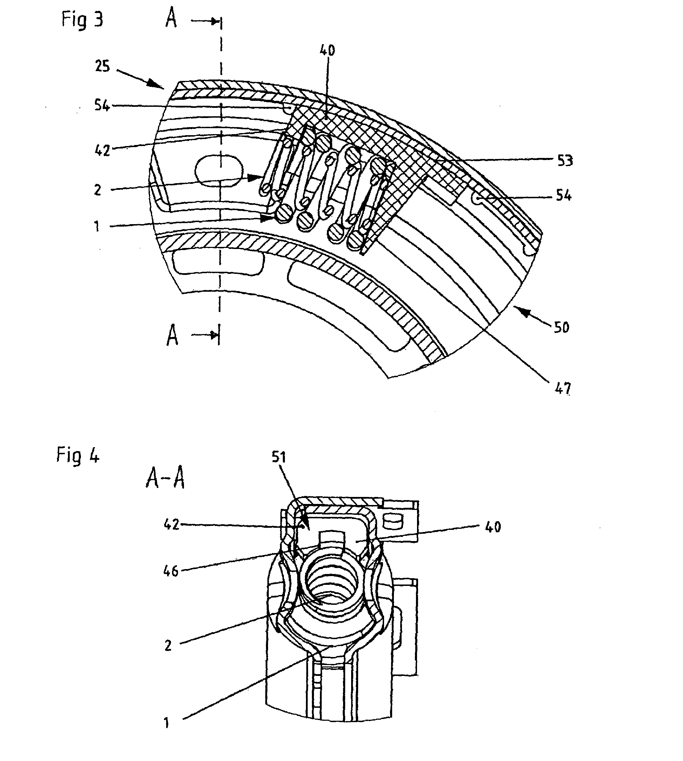

Fig. 3 zeigt ein Beispiel eines Gleitschuhs 50, welche in einem Torsionsschwingungsdämpfer eingesetzt ist. Wiederum ragt die erste Stirnseite 44 der zweiten, inneren Feder 2 aus der ersten Stirnseite 43 der ersten, äußeren Feder 1 heraus. Am gegenüberliegenden Ende liegen beide Federn 1,2 an einer diese begrenzenden Federhalteeinrichtung 47 an. Bei dieser Ausführungsform ist an einem Schuhkörper 40 nur eine Federpositionsbegrenzung 42 für die erste, äußere Feder 1 angeordnet. Der beispielhafte Gleitschuh 50 weist eine Gleitfläche 53 auf, welche einen gekrümmten Verlauf entsprechend der Krümmung der entsprechenden innenseitigen Führungsfläche eines Sekundärelementes 25 entspricht. In der Darstellung der Fig. 3 sind weiterhin axiale Öffnungen 54 in der Seitenscheibe erkennbar.

Fig. 4 zeigt einen Schnitt durch den in Fig. 3 dargestellten Torsionsschwingungsdämpfer entlang der Linie A-A.

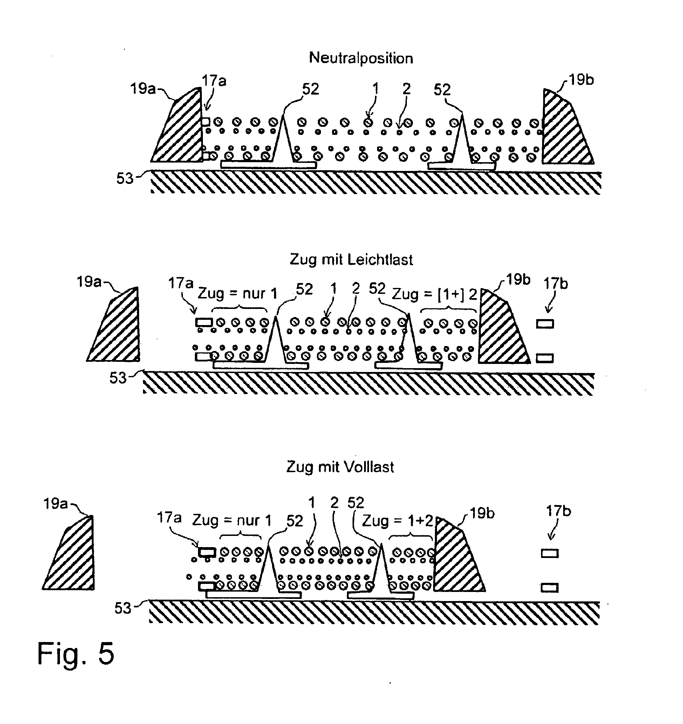

Fig. 5 zeigt in Seitenansicht ein Wirkprinzip einer ersten, äußeren Feder 1 und einer zweiten, inneren Feder 2, welche durch zwei Gleitschuhe 52 auf einer Gleitfläche 53 gelagert sind. Zwischen den beiden Gleitschuhen 52 kann dabei ein eigenständiger Federsatz aus einer äußeren und einer inneren Feder oder gegebenenfalls auch nur eine einzige einzelne Feder angeordnet sein. In einem solchen Fall werden außenseitig der beiden Gleitschuhe 52 jeweils eigene Federsätze aus einer ersten, äußeren Feder 1 und einer zweiten, inneren Feder 2 angeordnet, wobei die beiden zweiten, inneren Federn 2 stirnseitig in einer nicht kraftbeaufschlagten Stellung aus den ersten, äußeren Federn herausragen.

Zum Beaufschlagen der äußeren Stirnseiten sind wiederum Mitnehmer 19a, 19b skizziert, welche zueinander in gleichem Abstand angeordnet sind und in einer Neutralposition an den beiden äußeren Stirnseiten der Anordnung aus Federn 1, 2 anliegen. Vorzugsweise ragen dabei die beiden zweiten, inneren Federn 2 aus den Stirnseiten der beiden ersten, äußeren Federn 1 etwas heraus, wie dies in der obersten Darstellung skizziert ist. Die ersten, äußeren Federn 1 liegen zwischen den Mitnehmer Sekundärelementen 17a, 17b. In der mittleren Darstellung ist der Fall einer leichten Zuglast skizziert, bei der der rechtsseitig skizzierte Mitnehmer 19b eine Druckkraft auf die außenseitige Stirnseite der zweiten, inneren Feder 2 ausübt, welche dann letztendlich auf die gesamten Federanordnungen und Gleitschuhe 52 sowie auf die Mitnehmer 17a, 17b des Sekundärelements übertragen wird. Auf der gegenüberliegenden Seite der Anordnung, auf welcher sich der gegenüberliegende zweite Mitnehmer 19a von der Federanordnung entfernt, wird die äußere Feder 1 an dem Mitnehmer 17a des Sekundärelements stirnseitig abgestützt und die innere Feder 2 taucht unbelastet durch den Mitnehmer 17a des Sekundärelements hindurch. In der unteren Abbildung ist der Fall einer Volllast skizziert, bei welcher durch den rechtsseitig angeordneten Mitnehmer 19b sowohl die Stirnseite der zweiten, inneren Feder 2 als auch die Stirnseite der ersten, äußeren Feder 1 mit Kraft beaufschlagt wird.

Eine solche Funktionsweise ist nicht nur in einem Torsionsschwingungsdämpfer mit entsprechend gekrümmter Gleitfläche einsetzbar sondern prinzipiell auch in Fällen mit einer ebenen Gleitfläche 53, wie dies anhand Fig. 5 skizziert ist.

Vorzugsweise ist somit ein Schuh gemäß der vorstehenden Ausführungsformen insbesondere als ein Gleitschuh (skate) mit Innenfederauflage und Federpositionsbegrenzung ausgestaltet. Der Schuh dient dabei zur Abstützung und zur Kraftumlenkung von Federkräften.

Insbesondere in einem Torsionsschwingungsdämpfer ist die Schuhgeometrie so gewählt, dass die unbelastete erste, äußere Feder 1 in ihrer freien Länge im Schuh mit geringem Spiel zwischen der Federhalteeinrichtung 47 und der Federpositionsbegrenzung 42 eingelegt ist. Dadurch kann ein Herausrutschen vermieden werden, so dass sich die Feder 1 in Umfangsrichtung nicht vom Schuh entfernt. Unter Umfangsrichtung ist dabei eine tangentiale bzw. konzentrische Richtung um eine zentrale Rotationsachse des Torsionsschwingungsdämpfers zu verstehen.

Die in Umfangsrichtung überstehende zweite, innere Feder 2 ist in der unbelasteten Ausführung länger als die erste, äußere Feder 1 ausgestaltet. Die stirnseitig aus der ersten, äußeren Feder 1 herausragende zweite, innere Feder 2 kann sich mit ihrem herausragenden Abschnitt vorzugsweise auf der Federpositionsbegrenzung 42 für die erste, äußere Feder 1 abstützen bzw. ablegen. Optional kann eine weitere Federpositionsbegrenzung 45 für die zweite, innere Feder 2 an dem Schuh, beispielsweise dem Endschuh 18, ausgebildet sein. Die Federpositionsbegrenzungen 42, 45 weisen eine Aussparung bzw. Ausnehmung 46 auf, welche dimensioniert ist, ein Durchtauchen bzw. Durchführen des Mitnehmers 19b oder eines von dem Mitnehmer 19b in Richtung der Stirnseiten 43, 44 der Federn 1, 2 vorstehenden Abschnitts zuzulassen. Dadurch kann ein Flanschflügel eines solchen Mitnehmers 19b bei seiner Verdrehbewegung durch die Federpositionsbegrenzung 42, 45 hindurchtauchen und dadurch zuerst die längere zweite, innere Feder 2 und danach die zweite, innere Feder 2 und die erste, äußere Feder 1 betätigen. Vorzugweise weist die zweite, innere Feder 2 eine niedrigere Federrate als die erste, äußere Feder 1 auf.

Vorzugsweise sind die Maße des Schuhs in Form eines Endschuhs 18 oder Gleitschuhs und die Maße von Primärelement und Sekundärelement so aufeinander abgestimmt, dass der Schuh mit seiner Federpositionsbegrenzung die Anschläge des Primärelements und/oder des Sekundärelements berührungsfrei passieren kann. Vorzugsweise ist der Flanschflügel bzw. Mitnehmer 19b schmaler als die entsprechenden Federanschläge in Primär- und Sekundärmasse ausgeführt.

Alternativ sind Ausführungsformen mit variierten Bemaßungen und Anordnungen möglich. Beispielsweise kann der Schuh bei unbelastet annährend gleich langer erster, äußeren Feder und zweiter, inneren Feder auch lediglich mit nur der Federpositionsbegrenzung ausgeführt werden, wobei eine radiale Federabstützung entfällt.

Ermöglicht werden durch eine solche Anordnung neben einer Neutralposition insbesondere auch Leichtlastzustände und Lastwechselübergänge in vorteilhaften Ausgestaltungen, wie dies auch anhand Fig. 5 skizziert ist. In den Leichtlastzuständen, in denen nur die zweiten, inneren Federn 2 eines Torsionsschwingungsdämpfers betätigt werden, wird durch die "weiche" innere Feder mit beispielsweise einer geringeren Steigung eine bessere Isolation bzw. Schwingungsdämpfung realisiert. Das Übergangsmoment beim Anschlagen des Mitnehmers von nur der zweiten, inneren Feder 2 zu zusätzlich der ersten, äußeren Feder 1 kann entsprechend den gewünschten Verhaltensweisen angepasst werden.

Insbesondere wird dadurch, dass in den Endfedern sitzende Innenfedern durch die Federanschläge durchtauchen können, ein eventuell auftretendes Geräusch, welches durch das auftreffen der Feder auf die Federanschläge verursacht werden könnte, in bestimmten Situationen reduziert.

Bei einer Anordnung eines Gleitschuhs mit einer Innenfederauflage und Federpositionsbegrenzung in Art der Federpositionsbegrenzung 42 für die erste, äußere Feder 1 gemäß Fig. 1 sowohl auf der Zug- als auch auf der Schubseite ergibt sich für den Schub ein Funktionsvorteil. Die zweite, innere Feder 2 des schubseitigen Gleitschuhs wird im Zug ohne Vorspannung, d. h. ohne Federbetätigung, zwischen die Anschläge von Primär- und Sekundärmasse des Torsionsschwingungsdämpfers geschoben. Beim nachfolgenden Wechsel in den Schub ist nun die schubseitig betätigte unbelastet hervorstehende zweite, innere Feder sehr weich und kann ungehindert eine Isolationsfunktion bzw. Dämpfungsfunktion erfüllen.

Im Leerlauf bzw. in Neutralposition (Fig. 5) kann der Flanschflügel bzw. Mitnehmer zwischen den zwei weichen zweiten, inneren Federn 2 des Endfederpaketes schwingen. Dadurch ist eine bessere Isolation bzw. Schwingungsdämpfung realisierbar.

Dadurch, dass die unbelasteten Federn im Gleitschuh bzw. Endschuh zwischen zwei Grenzkonturen gelegt werden, d. h. zwischen einen Gleitschuhkeil in Form einer Federhalteeinrichtung 47 und eine Federpositionsbegrenzung 42, 45 können die Federn 1, 2 in Umfangsrichtung nicht aus dem Gleitschuh bzw. Endschuh 18 herausrutschen.

Der Endschuh ist optional mit Anschlagnasen als der Federpositionsbegrenzung ausführbar, welche Anstoßpunkte für die Stirnfläche des zugehörigen Federelements bilden. Sie verhindern, dass das Federelement mit seiner Stirnseite durch die Stirnfläche des Endschuhs nach vorne hindurchgleitet und das Federelement so seine Führung verliert.

### Bezugszeichenliste

- 1: erste, äußere Feder
- 2: zweite, innere Feder
- 3: Torsionsschwingungsdämpfer
- 5: Federsatz
- 6: Federsatz
- 7: Federsatz
- 8: Federsatz
- 9: Federsatz
- 10: Federsatz
- 11: Federsatz
- 12: Federsatz
- 13: Federsatz
- 14: Federsatz
- 15: Federsatz
- 16: Federsatz
- 17a: Mitnehmer Sekundärelement (Vorderteil)
- 17b: Mitnehmer Sekundärelement (Vorderteil)
- 17a': Mitnehmer Sekundärelement (Hinterteil)
- 17b': Mitnehmer Sekundärelement (Hinterteil)
- 18: Endschuh
- 18a: Endschuh
- 18b: Endschuh
- 18c: Endschuh
- 18d: Endschuh
- 19a: Mitnehmer Primärelement
- 19b: Mitnehmer Primärelement
- 24: hintere Seitenscheibe (Sekundärelement)
- 25: vordere Seitenscheibe (Sekundärelement)
- 26: Mittelscheibe (Primärelement)
- 27a: Gleitfläche Endschuh
- 27b: Gleitfläche Endschuh
- 27c: Gleitfläche Endschuh
- 27d: Gleitfläche Endschuh
- 28: Gleitschuh
- 29: Gleitschuh
- 30: Gleitschuh
- 31: Gleitschuh
- 32: Gleitschuh
- 33: Gleitschuh
- 34: Gleitschuh
- 35: Gleitschuh
- 36: Gleitschuh
- 37: Gleitschuh
- 40: Schuhkörper
- 41: Federlagefläche für 1
- 42: Federpositionsbegrenzung für 1
- 43: erste Stirnseite von 1
- 44: erste Stirnseite von 2
- 45: Federpositionsbegrenzung für 2
- 46: Ausnehmung
- 47: Federhalteeinrichtung
- 48: Federlagefläche für 2 (radial)
- 50: Gleitschuh
- 52: Gleitschuh
- 53: Gleitfläche
- 54: axiale Öffnung in Seitenscheibe
- α: maximale Stauchung

## Patentansprüche

1. Torsionsschwingungsdämpfer mit mindestens einem als Gleitschuh (28-37; 50; 52) oder Endschuh (18a-18d; 18) ausgebildeten Schuh zum Lagern einer ersten, äußeren Feder (1) und einer innerhalb der ersten, äußeren Feder (1) angeordneten zweiten, inneren Feder (2), der eine Federpositionsbegrenzung zum Begrenzen der ersten, äußeren Feder (1) in deren Längsrichtung und eine zum Schuh gehörende Halteeinrichtung (47) aufweist, die sowohl die erste, äußere Feder (1) als auch die zweite, innere Feder (2) von der zumindest einen Federpositionsbegrenzung (42) beabstandet am Schuh relativ zu diesem festlegt, **dadurch gekennzeichnet, dass**
die Federpositionsbegrenzung (42) ausgebildet ist, die zweite, innere Feder (2) stirnseitig aus der ersten, äußeren Feder (1) austreten zu lassen, so dass ein Mitnehmer (19b) bei Annäherung in Richtung der Stirnseiten (44, 43) der zweiten, inneren Feder (2) und der ersten, äußeren Feder (1) zuerst die zweite, innere Feder (2) mit Druck beaufschlagt,
die erste, äußere Feder (1) in ihrer axialen Erstreckung zwischen der Federpositionsbegrenzung (42) und der davon beabstandeten Halteeinrichtung (47) Spiel hat und
die erste, äußere Feder (1) an einer Federanlagefläche (41) radial abgestützt ist.

2. Torsionsschwingungsdämpfer nach Anspruch 1, **dadurch gekennzeichnet, dass** die Federpositionsbegrenzung (42) dem aus der ersten, äußeren Feder (1) herausragenden Abschnitt der zweiten, inneren Feder (2) zugewandt eine Federanlagefläche (48) zum Abstützen ausbildet, wobei die Federanlagefläche (48) für die zweite, innere Feder (2) vorzugsweise einen gekrümmten Verlauf mit einem Radius zumindest dem des Außenumfangs der zweiten, inneren Feder (2) aufweist.

3. Torsionsschwingungsdämpfer nach einem der vorangehenden Ansprüche, **dadurch gekennzeichnet, dass** die zweite, innere Feder (2) länger als die erste, äußere Feder (1) ausgebildet ist.

4. Torsionsschwingungsdämpfer nach einem der vorangehenden Ansprüche, **dadurch gekennzeichnet, dass** die zweite, innere Feder (2) einen geringeren Außenumfang aufweist als ein Innenumfang der ersten, äußeren Feder (1).

5. Torsionsschwingungsdämpfer nach einem der vorangehenden Ansprüche, **dadurch gekennzeichnet, dass** die zweite, innere Feder (2) weicher ist als die erste, äußere Feder (1).

6. Torsionsschwingungsdämpfer nach einem der vorangehenden Ansprüche, **dadurch gekennzeichnet, dass** in einer Federanordnung mit einem oder mehreren Federsätzen (6,7,8,9,10) bei wenigstens einem Federsatz an zumindest einer Stirnseite des Federsatzes, vorzugsweise an beiden Stirnseiten, die erste, äußere Feder (1) durch mindestens eine Federpositionsbegrenzung (42) begrenzt ist und die zweite, innere Feder (2) aus der zumindest einen Stirnseite (43) der ersten, äußeren Feder (1) herausragt.

7. Torsionsschwingungsdämpfer nach einem der vorangehenden Ansprüche, **dadurch gekennzeichnet, dass** stirnseitige Enden der zweiten, inneren Feder (2) oder Federn in einer neutralen Position unbelastet sind.

8. Torsionsschwingungsdämpfer nach einem der vorangehenden Ansprüche, **dadurch gekennzeichnet, dass** sowohl die erste, äußere Feder (1) als auch die zweite, innere Feder (2) durch zwei voneinander und von den Federenden der Federn (1, 2) beabstandeten Halteeinrichtungen an zwei Gleitschuhen (52) festgelegt sind, wobei die Gleitschuhe (52) frei zueinander über eine Gleitfläche (53) verstellbar sind.

9. Torsionsschwingungsdämpfer nach einem der vorangehenden Ansprüche, **dadurch gekennzeichnet, dass** eine weitere Federpositionsbegrenzung (45) am Schuh ausgebildet ist zur Begrenzung des stirnseitigen Federwegs der zweiten, inneren Feder (2).

10. Schuh nach Anspruch 9, **dadurch gekennzeichnet, dass** die weitere Federpositionsbegrenzung (45) für die zweite, innere Feder (2) auf der Federanlagefläche (48) der Federpositionsbegrenzung (42) für die erste, äußere Feder (1) angeordnet ist.

11. Torsionsschwingungsdämpfer nach einem der vorangehenden Ansprüche, **dadurch gekennzeichnet, dass** die Federpositionsbegrenzung (42, 45) eine hindurchgreifende Ausnehmung (46) aufweist, zum Durchtauchenlassen des Mitnehmers (19b) gegen die Stirnseiten (44, 43) der zweiten, inneren Feder (2) und der ersten, äußeren Feder (1).

12. Torsionsschwingungsdämpfer nach einem der vorangehenden Ansprüche, **dadurch gekennzeichnet, dass** die erste, äußere Feder (1) und die zweite, innere Feder (2) von der Federpositionsbegrenzung (42) aus unterschiedlich weit entfernt aneinander und/oder am Schuh festgelegt sind.

## Claims

1. Torsional vibration damper having at least one pad which is configured as a sliding pad (28-37; 50; 52) or end pad (18a-18d; 18) for mounting a first, outer spring (1) and a second, inner spring (2) which is arranged within the first, outer spring (1), which torsional vibration damper has a spring-position limiting means for limiting the first, outer spring (1) in its longitudinal direction and a holding device (47) which belongs to the pad and fixes both the first, outer spring (1) and the second, inner spring (2) relative to the pad in a manner which is spaced apart on the said pad by the at least one spring-position limiting means (42), **characterized in that** the spring-position limiting means (42) is configured to allow the second, inner spring (2) to emerge on the end side out of the first, outer spring (1), with the result that, when it approaches in the direction of the end sides (44, 43) of the second, inner spring (2) and the first, outer spring (1), a driver (19b) first of all loads the second, inner spring (2) with pressure, the first, outer spring (1) has play in its axial extent between the spring-position limiting means (42) and the holding device (47) which is spaced apart from the latter, and the first, outer spring (1) is supported radially on a spring bearing face (41).

2. Torsional vibration damper according to Claim 1, **characterized in that**, facing that section of the second, inner spring (2) which protrudes out of the first, outer spring (1), the spring-position limiting means (42) forms a spring bearing face (48) for support, the spring bearing face (48) for the second, inner spring (2) preferably having a curved profile with a radius at least equal to that of the outer circumference of the second, inner spring (2).

3. Torsional vibration damper according to one of the preceding claims, **characterized in that** the second, inner spring (2) is configured to be longer than the first, outer spring (1).

4. Torsional vibration damper according to one of the preceding claims, **characterized in that** the second, inner spring (2) has a smaller outer circumference than an inner circumference of the first, outer spring (1).

5. Torsional vibration damper according to one of the preceding claims, **characterized in that** the second, inner spring (2) is softer than the first, outer spring (1).

6. Torsional vibration damper according to one of the preceding claims, **characterized in that**, in a spring arrangement having one or more spring sets (6, 7, 8, 9, 10), the first, outer spring (1) is limited by at least one spring-position limiting means (42) and the second, inner spring (2) protrudes out of the at least one end side (43) of the first, outer spring (1), in the case of at least one spring set on at least one end side of the spring set, preferably on both end sides.

7. Torsional vibration damper according to one of the preceding claims, **characterized in that** end-side ends of the second, inner spring (2) or springs are unloaded in a neutral position.

8. Torsional vibration damper according to one of the preceding claims, **characterized in that** both the first, outer spring (1) and the second, inner spring (2) are fixed on two sliding pads (52) by two holding devices which are spaced apart from one another and from the spring ends of the springs (1, 2), the sliding pads (52) being freely adjustable with respect to one another via a sliding face (53).

9. Torsional vibration damper according to one of the preceding claims, **characterized in that** a further spring-position limiting means (45) is configured on the pad for limiting the end-side spring travel of the second, inner spring (2).

10. Pad according to Claim 9, **characterized in that** the further spring-position limiting means (45) for the second, inner spring (2) is arranged on the spring bearing face (48) of the spring-position limiting means (42) for the first, outer spring (1).

11. Torsional vibration damper according to one of the preceding claims, **characterized in that** the spring-position limiting means (42, 45) has a recess (46) which extends through it, for allowing the driver (19b) to dip through it against the end sides (44, 43) of the second, inner spring (2) and the first, outer spring (1).

12. Torsional vibration damper according to one of the preceding claims, **characterized in that** the first, outer spring (1) and the second, inner spring (2) are fixed to one another and/or to the pad at different spacings from the spring-position limiting means (42).

## Revendications

1. Amortisseur d'oscillations de torsion comprenant au moins un patin réalisé sous forme de patin de glissement (28-37 ; 50 ; 52) ou de patin d'extrémité (18a-18d ; 18), pour supporter un premier ressort extérieur (1) et un deuxième ressort intérieur (2) disposé à l'intérieur du premier ressort extérieur (1), qui présente une limitation de position de ressort pour limiter le premier ressort extérieur (1) dans sa direction longitudinale et un dispositif de retenue (47) appartenant au patin, qui fixe à la fois le premier ressort extérieur (1) ainsi que le deuxième ressort intérieur (2) sur le patin à distance de l'au moins une limitation de position de ressort (42) par rapport à celui-ci, **caractérisé en ce que**
la limitation de position de ressort (42) est réalisée de manière à laisser sortir le deuxième ressort intérieur (2) du côté frontal hors du premier ressort extérieur (1), de sorte qu'un dispositif d'entraînement (19b), lors du rapprochement dans la direction des côtés frontaux (44, 43) du deuxième ressort intérieur (2) et du premier ressort extérieur (1) sollicite en pression en premier le deuxième ressort intérieur (2),
le premier ressort extérieur (1) présente un jeu dans son étendue axiale entre la limitation de position de ressort (42) et le dispositif de retenue (47) espacé de celle-ci et
le premier ressort extérieur (1) est supporté radialement sur une surface d'appui de ressort (41).

2. Amortisseur d'oscillations de torsion selon la revendication 1, **caractérisé en ce que** la limitation de position de ressort (42), tournée vers la portion saillant hors du premier ressort extérieur (1) du deuxième ressort intérieur (2), constitue une surface d'appui de ressort (48) pour le support, la surface d'appui de ressort (48) pour le deuxième ressort intérieur (2) présentant de préférence une allure courbe avec un rayon correspondant au moins à celui de la périphérie extérieure du deuxième ressort intérieur (2).

3. Amortisseur d'oscillations de torsion selon l'une quelconque des revendications précédentes, **caractérisé en ce que** le deuxième ressort intérieur (2) est réalisé de manière plus longue que le premier ressort extérieur (1).

4. Amortisseur d'oscillations de torsion selon l'une quelconque des revendications précédentes, **caractérisé en ce que** le deuxième ressort intérieur (2) présente une périphérie extérieure plus petite qu'une périphérie intérieure du premier ressort extérieur (1).

5. Amortisseur d'oscillations de torsion selon l'une quelconque des revendications précédentes, **caractérisé en ce que** le deuxième ressort intérieur (2) est plus faible que le premier ressort extérieur (1).

6. Amortisseur d'oscillations de torsion selon l'une quelconque des revendications précédentes, **caractérisé en ce que** dans un agencement de ressort avec un ou plusieurs jeux de ressorts (6, 7, 8, 9, 10), dans le cas d'au moins un jeu de ressort sur au moins un côté frontal du jeu de ressort, de préférence sur les deux côtés frontaux, le premier ressort extérieur (1) est limité par au moins une limitation de position de ressort (42) et le deuxième ressort intérieur (2) fait saillie hors de l'au moins un côté frontal (43) du premier ressort extérieur (1).

7. Amortisseur d'oscillations de torsion selon l'une quelconque des revendications précédentes, **caractérisé en ce que** les extrémités du côté frontal du deuxième ressort intérieur (2) ou des ressorts ne sont pas contraintes dans une position neutre.

8. Amortisseur d'oscillations de torsion selon l'une quelconque des revendications précédentes, **caractérisé en ce que** le premier ressort extérieur (1) ainsi que le deuxième ressort intérieur (2) sont fixés par deux dispositifs de retenue espacés l'un de l'autre et des extrémités des ressorts (1, 2) sur deux patins de glissement (52), les patins de glissement (52) pouvant être déplacés librement l'un par rapport à l'autre par le biais d'une surface de glissement (53).

9. Amortisseur d'oscillations de torsion selon l'une quelconque des revendications précédentes, **caractérisé en ce qu'**une limitation de position de ressort supplémentaire (45) est réalisée sur le patin, pour limiter la course de ressort du côté frontal du deuxième ressort intérieur (2).

10. Patin selon la revendication 9, **caractérisé en ce que** la limitation de position de ressort supplémentaire (45) pour le deuxième ressort intérieur (2) est disposée sur la surface d'appui de ressort (48) de la limitation de position de ressort (42) pour le premier ressort extérieur (1).

11. Amortisseur d'oscillations de torsion selon l'une quelconque des revendications précédentes, **caractérisé en ce que** la limitation de position de ressort (42, 45) présente un évidement (46) traversant, pour permettre l'enfoncement du dispositif d'entraînement (19b) contre les côtés frontaux (44, 43) du deuxième ressort intérieur (2) et du premier ressort extérieur (1).

12. Amortisseur d'oscillations de torsion selon l'une quelconque des revendications précédentes, **caractérisé en ce que** le premier ressort extérieur (1) et le deuxième ressort intérieur (2) sont fixés l'un à l'autre et/ou sur le patin avec des espacements différents depuis la limitation de position de ressort (42).
